# EUROPEAN PATENT APPLICATION

(11) **EP 2 891 435 A1**
(43) Date of publication of application: **08.07.2015**
(21) Application number: 14177948.8
(22) Date of filing: 22.07.2014
(51) Int. Cl.: A47J 19/02

(54) **Safety apparatus of juice extraction module for juicer**

(30) Priority: 02.01.2014 KR 20140000229
(71) Applicant: NUC Electronics Co. Ltd., Daegu 702-858 (KR); Kim, Jong Boo, Daegu 702-918 (KR); Kim, Ji Tae, Daegu 702-918 (KR)
(72) Inventor: Kim, Jong Boo, 702-918 Daegu (KR)
(74) Representative: Desormiere, Pierre-Louis

(57) **Abstract**

Disclosed herein is a safety apparatus of a juice extraction module for a juicer. The safety apparatus includes an inlet unit (100) having a hollow body extending in a vertical direction and open at upper and lower ends thereof; a second shaft (502) formed of a metallic material and rotatably coupled to an outer surface at a lower end edge of the inlet unit, the second shaft being rotated by drive force from a first shaft (401) formed of a metallic material and provided to one end of a drive motor (400); a detection section (200) formed on an inner periphery of the inlet unit and including a sensor; and a controller (300) placed at a lower side of the second shaft and electrically connected to the detection section via the second shaft to stop rotation of the drive motor through detection of contact between a user's body and the detection section, wherein central lines of the inlet unit and the second shaft are placed on separate straight lines. The safety apparatus can prevent user injury due to carelessness in use.

## Description

### Technical Field

The present invention relates to a safety apparatus of a juice extraction module for a juicer and, more particularly, to a safety apparatus of a juice extraction module for a juicer, which can prevent a possibility of user injury due to carelessness in use.

### Background

For healthy life, many persons frequently drink green vegetable juice or fruit juice by directly extracting such juice at home. For this purpose, various machines for extracting juice from vegetables or fruits at home have been developed in the art.

For example, Korean Utility Model Application No. 20-1994-0019817 discloses a safety apparatus of a green vegetable juicer (hereinafter, "prior technique"), which is provided with a body detection section (10) including a ring (11) formed of a rubber material, cutout grooves (12), cutting pieces (13), and a conductive paint (14) applied to the ring (11).

However, in such a prior technique, a sensor has low sensitivity and thus does not operate even in the event where a portion of the user body passes through the cutting pieces (13), and the structural feature of the cutting pieces (13), which are radially formed along the circumference of the ring (11) by the cutting grooves (12), can cause severe user injury by making it difficult to escape from the cutting pieces when a portion of the user body is inserted into the cutting pieces (13).

Therefore, there is an urgent need for a safety apparatus capable of preventing accidents due to user carelessness as mentioned above.

### Brief summary of the invention

The present invention has been conceived to solve such a problem in the art, and an aspect of the present invention is to provide a safety apparatus of a juice extraction module for a juicer, which can prevent any possibility of user injury due to carelessness in use.

In accordance with one aspect of the present invention, a safety apparatus of a juice extraction module for a juicer includes: an inlet unit having a hollow body extending in a vertical direction and open at upper and lower ends thereof; a second shaft formed of a metallic material and rotatably coupled to an outer surface at a lower end edge of the inlet unit, the second shaft being rotated by drive force from a first shaft formed of a metallic material and provided to one end of a drive motor; a detection section formed on an inner periphery of the inlet unit and including a sensor; and a controller placed at a lower side of the second shaft and electrically connected to the detection section via the second shaft to stop rotation of the drive motor through detection of contact between a user body and the detection section, wherein central lines of the inlet unit and the second shaft are placed on separate straight lines.

The sensor may be a constant voltage detection sensor.

The safety apparatus may further include a gear assembly formed of an insulation material and disposed between an upper end of the first shaft and a lower end of the second shaft to transmit drive force from the first shaft to the lower end of the second shaft.

The gear assembly may include a drive force transmission gear formed of a synthetic resin and rotated by engaging with first gear teeth formed on one end of the first shaft, and a drive force transmission shaft having second gear teeth formed at a lower end thereof and rotated by engaging with the drive force transmission gear, the drive force transmission shaft being collinearly placed with the second shaft such that an upper end of the drive force transmission shaft is fitted into the lower end of the second shaft.

The gear assembly may further include an insulation plate formed of an insulation material and placed between the upper end of the first shaft and the lower end of the second shaft.

The synthetic resin may include at least one selected from among polyacetal, polycarbonate, ABS, polypropylene, polyester resins, and mixtures thereof.

The detection section may be a ring-shaped sensor body mounted along an inner periphery of the inlet unit.

The controller may include a sensor PCB including a sensor detection circuit electrically connected to the detection section, a capacitor electrically connected to the sensor PCB and capable of controlling sensitivity of the detection section, and an ON/OFF controller electrically connected to the sensor PCB and the capacitor and supplying or blocking an external power source, or activating or stopping the drive motor.

The sensor PCB may further include a switching circuit that stops operation of the drive motor when the detection section detects the user body.

In the safety apparatus according to the present invention as described above, the controller immediately stops rotation of the drive motor in response to a body contact signal sent from the detection section placed on the inner periphery of the inlet unit, thereby preventing any possibility of user injury due to carelessness in use.

Particularly, according to the present invention, since a detection path of the detection section, that is, electrical connection of the detection section, is provided only inside the safety apparatus, instead of being exposed, the safety apparatus has a reduced number of components while maintaining pleasant product appearance, thereby providing products of high reliability to consumers.

### Brief description of the drawings

Fig. 1 is a conceptual sectional view of a safety apparatus of a juice extraction module for a juicer according to one embodiment of the present invention;
Fig. 2 is a block diagram illustrating an electrical connection state among main parts including a controller, a detection section and a drive motor in the safety apparatus according to the embodiment of the present invention; and
Fig. 3 is a block diagram illustrating an electrical connection state of a capacitor of the controller in the safety apparatus according to the embodiment of the present invention.

### Detailed description

The above and other aspects, features and advantages of the invention will become apparent from the following description of the following embodiments given in conjunction with the accompanying drawings.

However, it should be understood that the present invention is not limited to the following embodiments and may be embodied in different ways.

Rather, the following embodiments are given by way of illustration only to provide thorough understanding of the invention to those skilled in the art.

In the drawings, the thicknesses of layers and regions can be exaggerated or omitted for clarity.

Herein, spatially relative terms, such as "above," "upper (portion)," "upper surface," and the like may be understood as meaning "below," "lower (portion)," "lower surface," and the like according to a reference orientation. In other words, the expressions of spatial orientations are to be construed as indicating relative orientations instead of absolute orientations

In addition, terms such as "upper side" and "lower side" are defined with reference to the accompanying drawings. Thus, it will be understood that the term "upper side" can be used interchangeably with the term "lower side".

The terminology is used herein for the purpose of describing particular embodiments only and is not intended to be limiting of the invention.

Further, the singular forms "a", "an" and "the" are intended to include the plural forms as well, unless context clearly indicates otherwise.

It will be further understood that the terms "comprise," "include," and/or "have(has)" as used in this specification, specify the presence of stated features, steps, operations, elements, and/or components, but do not preclude the presence or addition of one or more other features, steps, operations, elements, components, and/or groups

Unless otherwise defined herein, all terms including technical or scientific terms used herein have the same meanings as commonly understood by those skilled in the art to which the present invention pertains.

It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein.

Exemplary embodiments of the invention will now be described in detail with reference to the accompanying drawings.

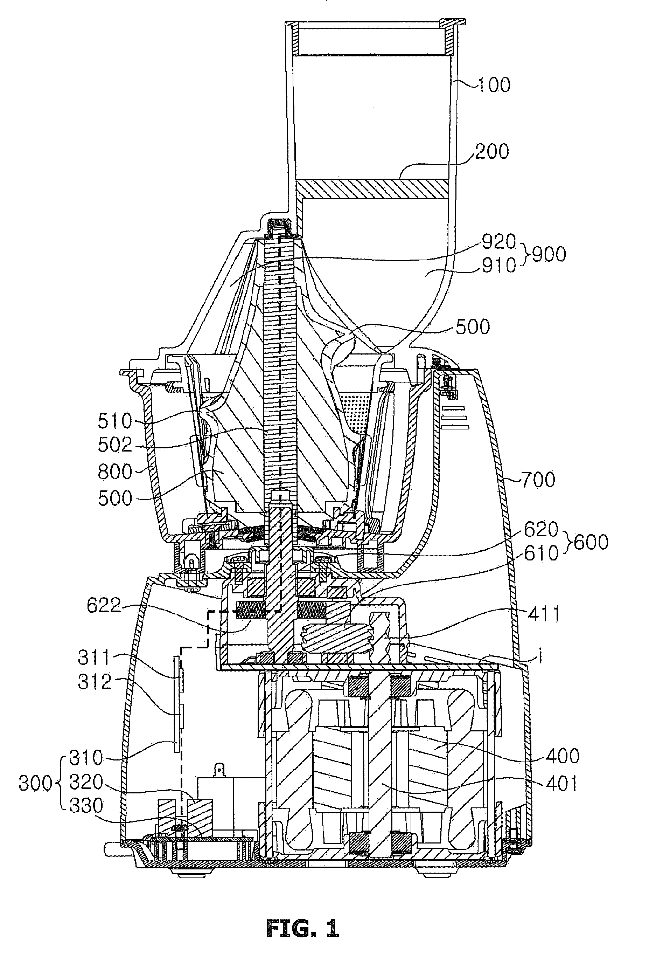

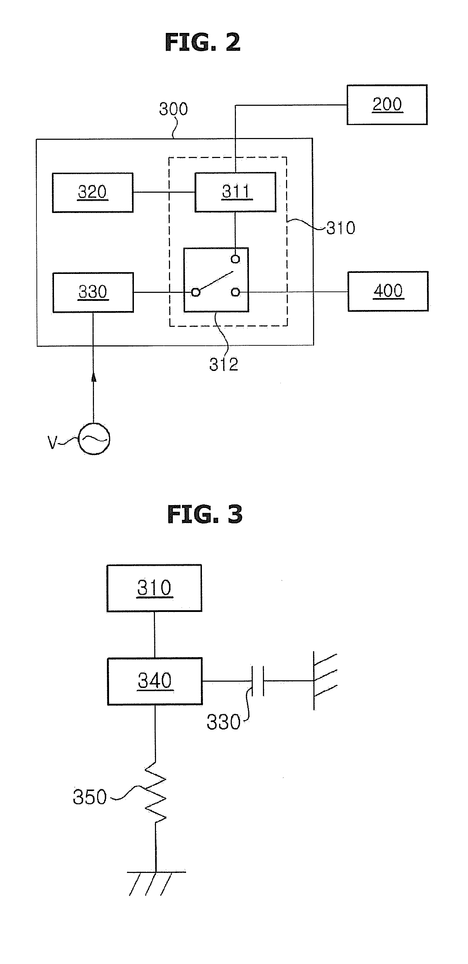

Fig. 1 is a conceptual sectional view of a safety apparatus of a juice extraction module for a juicer according to one embodiment of the present invention; Fig. 2 is a block diagram illustrating an electrical connection state among main parts including a controller, a detection section and a drive motor in the safety apparatus according to the embodiment of the present invention; and Fig. 3 is a block diagram illustrating an electrical connection state of a capacitor of the controller in the safety apparatus according to the embodiment of the present invention.

As shown, a safety apparatus of a juice extraction module for a juicer according to one embodiment of the invention may include an inlet unit 100, a detection section 200, a controller 300, and a second shaft 502.

The inlet unit 100 has a hollow shape extending in a vertical direction and open at upper and lower ends thereof. The inlet unit has a size and diameter capable of receiving food materials without pre-processing of the food materials, that is, without chopping the food materials into a small size.

The inlet unit 100 can be considered a technical means for providing convenience in juice extraction.

The second shaft 502 is formed of a metallic material and is rotatably coupled to an outer surface at a lower end edge of the inlet unit 100. In addition, the second shaft 502 is rotated by drive force from a first shaft 401, which is formed of a metallic material and provided to one end of a drive motor 400. The second shaft 502 has a screw 500, which will be described below, formed on a surface thereof in a vertical direction.

The detection section 200 is formed on an inner periphery of the inlet unit 100 and includes a sensor to detect a portion of a user body inserted into the inlet unit 100 in real time.

The controller 300 is disposed at a lower side of the second shaft 502 and is electrically connected to the detection section 200 through the second shaft 502 to stop rotation of the drive motor 400 when the detection section 200 detects contact of the user body.

Here, the controller 300 may stop rotation of the drive motor when the detection section 200 detects not only the user body, but also a conductive material, such as a spoon, knife, chopsticks, fork, or the like, which is not related with a food material and gripped by a user.

In this embodiment, central lines of the inlet unit 100 and the second shaft 502 may be parallel to each other, as shown in the drawing, or may be placed on separate lines, although not shown.

Specifically, the central line of the inlet unit 100 may be slanted with respect to the central line of the second shaft 502, that is, with respect to an upper surface of a container 800 described below. Obviously, the detection section 200 may be formed on the inner periphery of the inlet unit 100 having such a configuration.

Thus, according to the present invention, the detection section 200 detects a portion of the user body inserted into the inlet unit 100 and sends a detection signal to the controller 300 in an emergency, such that the controller 300 immediately stops operation of the drive motor 400, thereby preventing any possibility of user injury.

It should be understood that the present invention is not limited to the above embodiment and may also be realized by various embodiments, for example, by the following embodiment.

As the sensor, the detection section 200 may include a constant voltage detection sensor, which can control ON/OFF upon generation of constant voltage and has a detection sensitivity determined by a capacitor 320 of the controller 300 described below.

A gear assembly 600 formed of an insulation material is disposed between an upper end of the first shaft 401 and a lower end of the second shaft 502 to transmit drive force from the first shaft 401 towards the lower end of the second shaft 502, and may include a drive force transmission gear 610 and a drive force transmission shaft 620.

The drive force transmission gear 610 is formed of a synthetic resin and rotated by engaging with first gear teeth 411 formed on one end of the first shaft 401, and is provided for electrical insulation between the first shaft 401 and the second shaft 502.

Preferably, the gear assembly 600 further includes an insulation plate (i), which is formed of an insulation material, such as a synthetic material, and placed between the upper end of the first shaft 401 and the lower end of the second shaft 502, that is, at a lower end of the drive force transmission shaft 620 coupled to the lower end of the second shaft 502 such that the gear assembly 600 including the drive force transmission gear 610 is insulated from the drive motor 400.

More specifically, the drive force transmission shaft 620 has second gear teeth 622, which are formed at a lower end thereof and are rotated by engaging with the drive force transmission gear 610, and is collinearly placed with the second shaft 502 such that an upper end of the drive force transmission shaft 620 is fitted into the lower end of the second shaft 502.

Here, the synthetic resin for the drive force transmission gear 610 may include at least one selected from among polyacetal, polycarbonate, ABS, polypropylene, polyester resins, and mixtures thereof.

Here, although the entirety of the drive force transmission gear 610 may be formed of the synthetic resin, the drive force transmission gear 610 may be formed of a metallic material and electrical insulation of the drive force transmission gear 610 can be achieved by coating an outer surface thereof with the synthetic resin.

Preferably, the detection section 200 may be a ring-shaped sensor body mounted along the inner periphery of the inlet unit 100 in order to send a detection signal to the controller upon detecting contact between a portion of the user body and the inner periphery of the inlet unit 100.

Such a sensor body is a kind of constant voltage detection sensor as described above, and can be called a touch sensor which responds to contact of a conductive material including the human body, and is configured to send an ON/OFF control signal to the controller 300 according to a voltage level (typically in the range of 0 to 5.5V).

The controller 300 stops operation of the drive motor 400 in association with the detection section 200, and may include a sensor PCB 310, a capacitor 320 and an ON/OFF controller 330, as shown in Fig. 1 to Fig. 3.

The sensor PCB 310 includes a sensor detection circuit 311 electrically connected to the detection section 200.

The capacitor 320 is electrically connected to the sensor PCB 310 to adjust sensitivity of the detection section 200 and may be a capacitive element.

The ON/OFF controller 330 is mounted outside circuits of the sensor PCB 310 including the sensor detection circuit 311 and the like, and is electrically connected to the sensor PCB 310 and the capacitor 320 to supply or block an external power source (V), or to activate or stop the drive motor 400.

The sensor PCB 310 may further include a switching circuit 312 that stops operation of the drive motor 400 when the detection section 200 detects contact of the user body.

Namely, the switching circuit 312 maintains electrical connection of the external power source (V) to the ON/OFF controller 330 and the drive motor 400 in a normal state, and stops operation of the drive motor 400 by cutting off electrical connection of the external source (V) to the ON/OFF controller 330 and the drive motor 400 as soon as the detection section 200 sends an emergency detection signal to the sensor detection circuit 311.

In order to allow rapid and sensitive stopping of the drive motor 400, the capacitor 330 is electrically connected to a drive IC 340, which manages overall operation of the sensor PCB 310, and a resistor 350 may be additionally provided to protect the sensor PCB 310 from electric impact, as shown in Fig. 3.

In some embodiments, the safety apparatus may further include a body 700 which accommodates the drive motor 400 therein, a screw 500 which accommodates the second shaft 502 therein, has a gradually decreasing width in an upward direction and is formed with a spiral crushing blade 510 along an outer surface thereof, and a container 800 which is seated on the body 700 and accommodates the screw 500 therein.

Here, the inlet unit 100 is disposed at an upper side of the container 800.

Here, the inlet unit 100 may be placed on a cover 920, which includes a material guide plane 910 and a crushing plane 920 to allow efficient guidance and crushing of a food material input into the inlet unit 100.

Specifically, the material guide plane 910 extends outside at an inclined angle from an edge of the lower end of the inlet unit 100 in a downward direction to form a guide path, along which a food material supplied from the inlet unit 100 is guided.

The crushing plane 920 extends in a spiral shape from the material guide plane 910 and is coupled at an upper end thereof to the second shaft 502 outside the lower end edge of the inlet unit 100 to gradually approach an outer surface of the spiral crushing blade 510 of the screw 500.

Accordingly, the cover 900 is seated on the body 700, which accommodates the drive motor 400, and is detachably coupled to an upper side of the container 800 which accommodates the second shaft 502.

As such, it can be seen that the present invention has a technical idea of providing a safety apparatus of a juice extraction module for a juicer, which can prevent any possibility of user injury due to carelessness in use.

Although some embodiments have been described herein, it should be understood by those skilled in the art that these embodiments are given by way of illustration only, and that various modifications, variations, and alterations can be made without departing from the spirit and scope of the invention. Therefore, the scope of the invention should be limited only by the accompanying claims and equivalents thereof.

## Claims

1. A safety apparatus of a juice extraction module for a juicer, the apparatus comprising:
an inlet unit (100) having a hollow body extending in a vertical direction and open at upper and lower ends thereof;
a second shaft (502) formed of a metallic material and rotatably coupled to an outer surface at a lower end edge of the inlet unit, the second shaft being rotated by drive force from a first shaft (401) formed of a metallic material and provided to one end of a drive motor (400);
a detection section (200) formed on an inner periphery of the inlet unit and including a sensor; and
a controller (300) placed at a lower side of the second shaft and electrically connected to the detection section via the second shaft to stop rotation of the drive motor through detection of contact between a user body and the detection section,
wherein central lines of the inlet unit and the second shaft are placed on separate straight lines.

2. The safety apparatus according to claim 1, wherein the sensor is a constant voltage detection sensor.

3. The safety apparatus according to claim 1, further comprising:
a gear assembly (600) formed of an insulation material and disposed between an upper end of the first shaft (401) and a lower end of the second shaft (502) to transmit drive force from the first shaft to the lower end of the second shaft.

4. The safety apparatus according to claim 3, wherein the gear assembly (600) comprises:
a drive force transmission gear (610) formed of a synthetic resin and rotated by engaging with first gear teeth (411) formed on one end of the first shaft (401); and
a drive force transmission shaft (620) having second gear teeth (622) formed at a lower end thereof and rotated by engaging with the drive force transmission gear,
the drive force transmission shaft being collinearly placed with the second shaft (502) such that an upper end of the drive force transmission shaft is fitted into the lower end of the second shaft.

5. The safety apparatus according to claim 4, wherein the gear assembly (600) further comprises an insulation plate (i) formed of an insulation material and placed between the upper end of the first shaft (401) and the lower end of the second shaft (502).

6. The safety apparatus according to claim 4, wherein the synthetic resin comprises at least one selected from among polyacetal, polycarbonate, ABS, polypropylene, polyester resins, and mixtures thereof.

7. The safety apparatus according to claim 1, wherein the detection section (200) is a ring-shaped sensor body mounted along an inner periphery of the inlet unit (100).

8. The safety apparatus according to claim 1, wherein the controller (300) comprises:
a sensor PCB (310) including a sensor detection circuit (311) electrically connected to the detection section;
a capacitor (320) electrically connected to the sensor PCB and capable of controlling sensitivity of the detection section; and
an ON/OFF controller (330) electrically connected to the sensor PCB and the capacitor and supplying or blocking an external power source (V), or activating or stopping the drive motor (400).

9. The safety apparatus according to claim 8, wherein the sensor PCB further comprises a switching circuit (312) that stops operation of the drive motor (400) when the detection section (200) detects the user body.
